# EUROPÄISCHE PATENTSCHRIFT

(11) **EP 1 041 359 B1**
(45) Veröffentlichungstag und Bekanntmachung des Hinweises auf die Patenterteilung: **02.06.2004**
(21) Anmeldenummer: 00106240.5
(22) Anmeldetag: 22.03.2000
(51) Int. Cl.: G01B 21/04

(54) **Temperaturkompensierter Tetraeder Prüfkörper**
Temperature compensated tetrahedron test body
Element de test tétraèdrique avec compensation des variations de température

(30) Priorität: 01.04.1999 DE 19915012
(43) Veröffentlichungstag der Anmeldung: 04.10.2000
(73) Patentinhaber: Metronom GmbH Industrial Measurements, 55120 Mainz (DE)
(72) Erfinder: Blondeau, Jean, Dr., 74889 Sinsheim (DE)
(74) Vertreter: Grünecker, Kinkeldey, Stockmair & Schwanhäusser Anwaltssozietät

(56) Entgegenhaltungen:
- EP-A- 0 350 532
- EP-A- 0 362 626
- EP-B- 0 491 734
- DE-A- 3 938 034
- DE-A- 19 720 883
- US-A- 4 492 036

## Beschreibung

Die Erfindung betrifft einen Prüfkörper mit vier Antastformelementen, und sechs Verbindungselementen, wobei die Antastformelemente durch die Verbindungselemente derart verbunden sind, daß jedes Antastformelement genau drei Verbindungselemente an deren Endflächen berührt und durch die Antastformelemente und die Verbindungselemente insgesamt ein Tetraeder gebildet wird, an dessen Ecken die Antastformelemente angeordnet sind.

Solche Prüfkörper dienen im allgemeinen zur Überwachung von räumlich positionierenden bzw. messenden Systemen, insbesondere von mobilen Koordinatenmeßsystemen. Damit die entsprechenden Prüfkörper zur Überwachung dieser mobilen Geräte mit wirtschaftlich vertretbarem Aufwand vor Ort transportiert werden können, dürfen sie kein hohes Eigengewicht aufweisen.

Vorteilhafterweise können sie darüber hinaus einfach demontierbar sein.

Ein Prüfkörper der oben genannten Art ist aus der DE 19720883 oder der DE 29708830 bekannt.

Der dort gezeigte Prüfkörper umfaßt kugelförmige Antastformelemente und stabförmige Verbindungselemente. Die Verbindungselemente bestehen aus Kohlenstoffaser-Verbundwerkstoffen mit unidirektionalen Fasern in Längsrichtung.

Derartige Kohlenstoffaser-Verbundwerkstoffen zeigen zwar einen sehr kleinen Längenausdehnungskoeffizienten bei Standardmeßbedingungen, also bei einer Temperatur von -20°C bis +70°C und einer Luftfeuchtigkeit von 0 % bis 100 %; dieser Längenausdehnungskoeffizient ist dennoch zu groß und variiert über diesen Temperaturbereich und diesen Luftfeuchtigkeitsbereich zu stark, um präzise und reproduzierbare Meßergebnisse zu gewährleisten.

Angesichts des vorangegangenen liegt der Erfindung die Aufgabe zugrunde, die bekannten Prüfkörper so zu verbessern, daß die mit diesem Prüfkörper erhaltenen Messungen bei Standardmeßbedingungen von den Umgebungsverhältnissen unabhängige Ergebnisse liefern.

Erfindungsgemäß wird diese Aufgabe durch einen Prüfkörper der zuvor genannten Art gelöst, der sich dadurch auszeichnet, daß das Material und/oder die Bemessung der Antastformelemente und das Material und/oder die Bemessung der Verbindungsetemente derart aufeinander abgestimmt sind, daß der Gesamtlängenausdehnungskoeffizient bei Standardmeßbedingungen von Antastpunkt zu Antastpunkt auf verschiedenen Antastformelementen im wesentlichen gleich Null ist.

Demnach schafft die Erfindung einen Prüfkörper, in dem die Antastpunkte der einzelnen Antastformelemente im in Frage stehenden Meßbereich einen konstanten Abstand zueinander aufweisen, der zum einen durch eine Kalibrierung sehr genau ermittelt werden kann und dadurch absolut genaue Meßergebnisse ermöglicht, und zum anderen von Temperaturänderungen und Feuchtigkeitsänderungen innerhalb des Meßbereichs unabhängig ist.

Gemäß einer ersten Alternative der Erfindung weisen die Antastformelemente ein Material mit positivem oder negativem Längenausdehnungskoeffizienten bei Standardmeßbedingungen auf, die Verbindungselemente weisen ein Material mit negativem bzw. positivem Längenausdehnungskoeffizienten bei Standardmeßbedingungen auf, und die Bemessung der Antastformelemente und die Bemessung der Verbindungselemente sind derart aufeinander abgestimmt, daß der Gesamtlängenausdehnungskoeffizient bei Standardmeßbedingungen von Antastpunkt zu Antastpunkt auf verschiedenen Antastformelementen im wesentlichen gleich Null ist.

Gemäß einer bevorzugten Weiterbildung dieser ersten Alternative umfaßt das Material der Antastformelemente Stahl oder Keramik und das Material der Verbindungselemente umfaßt Kohlenstoffaser-Verbundwerkstoff.

Durch Verwendung dieser Materialien können besonders leichte Prüfkörper geschaffen werden, die mit wirtschaftlich vertretbarem Aufwand an den Einsatzort transportiert werden können.

Gemäß einer zweiten Alternative der vorliegenden Erfindung ist ein Prüfkörper vorgesehen, in welchem das Material der Verbindungselemente Glaskeramik-Werkstoff umfaßt, und das Material der Antastformelemente Stahl oder Glas oder Glaskeramik umfaßt, wodurch das Material der Verbindungselemente und das Material der Antastformelemente so aufeinander abgestimmt sind, daß der Gesamtlängenausdehnungskoeffizient bei Standardmeßbedingungen von Antastpunkt zu Antastpunkt auf verschiedenen Antastformelementen im wesentlichen gleich Null ist.

Insbesondere können durch Einsatz von seit langem bekanntem Glaskeramik-Werkstoffen sehr längenstabile Verbindungselemente erhalten werden. Aufgrund des verschwindenden Längenausdehnungskoeffizienten von Glaskeramik-Werkstoff wird durch Verwendung von Verbindungselementen aus Glaskeramik-Werkstoff und Abtastformelementen aus herkömmlicherweise verwendeten Materialien, beispielsweise Stahl oder Keramik eine sehr gute Abstimmung der Materialien aufeinander erzielt. Bereits diese Kombination liefert bezüglich der Formstabilität gegenüber den aus dem Stand der Technik bekannten Formkörpern eine merkliche Verbesserung.

Demnach kann durch Verwendung von Verbindungselementen aus Glaskeramik-Werkstoff eine große Flexibilität bei dem Material der Antastformelemente erzielt werden, wobei gewährleistet bleibt, daß der Prüfkörper gemäß der zweiten Alternative gegenüber bekannten Prüfkörpern eine merkliche Verbesserung bezüglich seiner Stabilität gegenüber Umwelteinflüssen, wie Temperatur und/oder Luftfeuchtigkeit, zeigt.

Die zweite Alternative kann dahingehend verbessert werden, daß die Abtastformelemente auch aus einem Material mit verschwindendem Längenausdehnungskoeffizienten, beispielsweise Glaskeramik oder Metallegierungen, wie Invar, gebildet werden.

Ein weiterer Vorteil der Verwendung von Glaskeramik-Werkstoff besteht darin, daß seine Empfindlichkeit gegenüber Feuchtigkeit geringer als die Empfindlichkeit von Kohlenstoffaser-Verbundwerkstoff, dessen Längenausdehnungskoeffizient stark von der Feuchtigkeit abhängt, ist. Eine zusätzliche Behandlung der Verbindungselemente, wie sie bei Kohlenstoffaser-Verbundwerkstoff, insbesondere wenn dieser unter feuchten Bedingungen eingesetzt werden soll, erforderlich ist, kann somit entfallen.

Als Glaskeramik-Werkstoff lassen sich insbesondere Zerodur oder Ceran einsetzen. Zu Metallegierungen, die einen verschwindenden Längenausdehnungskoeffizienten aufweisen, zählt Invar.

Gemäß einer dritten Alternative der vorliegenden Erfindung wird ein Prüfkörper geschaffen, in welchem die Verbindungselemente ein erstes Material mit einem positiven Längenausdehnungskoeffizienten bei Standardmeßbedingungen und ein zweites Material mit einem negativen Längenausdehnungskoeffizienten bei Standardmeßbedingungen aufweisen, und das Material der Antastformelemente Stahl oder Glas oder Glaskeramik-Werkstoff umfaßt, wobei die Verteilung des ersten und zweiten Materials im Verbindungselement und das Material der Antastformelemente derart aufeinander abgestimmt sind, daß der Gesamtlängenausdehnungskoeffizient bei Standardmeßbedingungen von Antastpunkt zu Antastpunkt auf verschiedenen Antastformelementen im wesentlichen gleich Null ist.

Diese dritte Alternative führt prinzipiell zu demselben Effekt wie die zweite Alternative, nämlich daß die Verbesserung gegenüber dem Stand der Technik hauptsächlich durch eine erhöhte Längenstabilität der Verbindungselemente bewirkt wird. Die erhöhte Längenstabilität der Verbindungselemente ermöglicht wiederum eine sehr große Flexibilität bei der Auswahl des Materials und der Bemessung der Antastformelemente, wobei eine merkliche Verbesserung des Prüfkörpers bezüglich seiner Stabilität gegenüber Umwelteinflüssen, wie Temperatur und/oder Luftfeuchtigkeit, gewährleistet werden kann. Vorteilhafterweise kann zusätzlich durch gleichzeitige Optimierung des Materials der Antastformelemente ein Prüfkörper geschaffen werden, mit dem höchst präzise Meßergebnisse erzielt werden können.

Gemäß einer bevorzugten Weiterbildung können als erstes Material für das Verbindungselement Stahl und als zweites Material für das Verbindungselement Kohlenstoffaser-Verbundwerkstoff eingesetzt werden. Durch diese Materialien kann ein sehr leichter Prüfkörper geschaffen werden, der leicht und wirtschaftlich an seinen Einsatzort transportiert werden kann.

Gemäß einer vorteilhaften Weiterbildung aller drei Alternativen können die Abtastformelemente des Prüfkörpers kugelförmig ausgebildet sein; die Verbindungselemente können vorteilhafterweise stabförmig ausgebildet sein.

Aufgrund dieser speziellen Anordnung führt bereits ein vergleichsweise grobes Positionieren der Verbindungselemente zu relativ genauen Positionen der Abtastformelemente zueinander. Ein weiterer Vorteil dieser Anordnung besteht darin, daß alle vier Abtastformelemente in der Regel mit nur einem Taststift zugänglich sind.

Vorteilhafterweise können bei der oben beschriebenen bevorzugten Weiterbildung die Kugelmittelpunkte der Abtastformelemente auf den Verlängerungen der Achsen der stabförmigen Verbindungselemente liegen. Diese Anordnung unterstützt die oben beschriebenen Vorteile.

Gemäß einer anderen vorteilhaften Weiterbildung können die Endflächen der Verbindungselemente hierbei kegelförmig, vorzugsweise dem Radius der kugelförmigen Antastformelemente angepaßt, ausgebildet werden. Dies führt dazu, daß die Positionierungsgenauigkeit der Abtastformelemente bezüglich der Verbindungselemente weiter gesteigert werden kann.

Gemäß einer weiteren Ausbildung der zuvor beschriebenen Alternativen können die Abtastformelemente und die Verbindungselemente, beispielsweise durch Magnetkräfte, lösbar verbindbar verbunden sein. Hierdurch wird ein Mechanismus zur Verfügung gestellt, der ein besonderes einfachen Montieren und Demontieren des Prüfkörpers erlaubt und damit einen vereinfachten Transport des Prüfkörpers an seinen Einsatzort ermöglicht.

Zur Ausbildung der magnetischen Verbindung können Magneten mit den Enden der Verbindungselemente elastisch verklebt werden. Vorteil hiervon ist es, daß Sprengeffekte, insbesondere bei Verwendung von Materialien, wie Keramik oder Glaskeramik, vermieden werden können. Bei dieser Ausbildung können die Antastformelemente aus magnetischem Material bestehen oder ebenfalls Magnete aufweisen.

Gemäß einer erfindungsgemäßen Weiterbildung kann ein Großprüfkörper mit einer gitterförmigen Struktur gebildet werden, die aus wenigstens zwei Prüfkörpern gemäß einem der zuvor beschriebenen Prüfkörper aufgebaut ist, wobei jeweils einander benachbarte Antastformelemente durch ein Antastformelement ersetzt sind, und jeweils parallele benachbarte Verbindungselemente durch ein Verbindungselement ersetzt sind.

Auf diese Weise entsteht ein Gitter, das aus einer Mehrzahl von aneinander angrenzenden Tetraedern ohne Zwischenräume aufgebaut ist. Die Gitterpunkte sind hierbei jeweils von einem Antastformelement besetzt. Jedes Antastformelement innerhalb des Gitters ist mit vier Verbindungselementen gekoppelt. An den Gittergrenzen ist jedes Antastformelement hingegen mit drei Verbindungselementen gekoppelt.

Vorteil dieser Weiterbildung ist es, daß hierdurch Großprüfkörper mit sehr hoher Stabilität gebildet werden können.

Weitere Vorteile ergeben sich aus der folgenden Beschreibung spezieller Ausführungsformen der vorliegenden Erfindung unter Bezugnahme auf die Zeichnung. In der Zeichnung zeigen:
- Fig. 1: eine Ausführungsform eines Prüfkörpers gemäß der vorliegenden Erfindung; und
- Fig. 2: eine Halteeinrichtung für einen Prüfkörper gemäß der vorliegenden Erfindung.

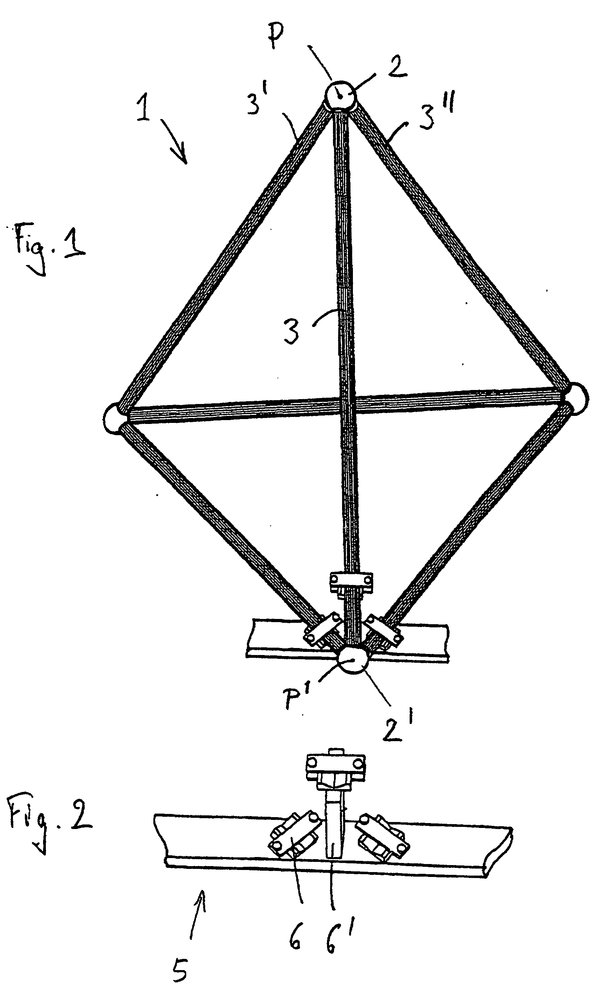

In Fig. 1 ist mit dem Bezugszeichen 1 ein Prüfkörper gemäß der vorliegenden Erfindung dargestellt. Der Prüfkörper umfaßt vier kugelförmige Antastformelemente, von denen eines mit dem Bezugszeichen 2 und ein anderes mit dem Bezugszeichen 2' versehen ist. Weiterhin weist der Prüfkörper 1 sechs stabförmige Verbindungselemente auf, von denen drei mit den Bezugszeichen 3, 3' und 3" gekennzeichnet sind.

Jedes Antastformelement 2 ist durch ein Verbindungselement 3 mit jedem anderen Antastformelement 2' verbunden. Falls der Probekörper demontierbar sein soll, kann eine lösbare Verbindung vorgesehen werden, die beispielsweise durch Magnetkräfte realisiert ist. Zweckmäßigerweise werden hierfür Magnete mit den Enden der Verbindungselemente 3 elastisch verklebt. Die Antastformelemente 2 bestehen in diesem Fall aus magnetischem Material oder umfassen ebenfalls Magnete.

In der gezeigten Ausführungsform berührt jedes Antastformelement 2 genau drei Verbindungselemente 3, 3' und 3" an deren Endflächen. Die Endflächen der Verbindungselemente sind hierbei vorteilhafterweise konkav ausgebildet. Insgesamt wird somit ein Tetraeder gebildet, an dessen Ecken die Anformelemente 2 angeordnet sind.

Gemäß der in Fig. 1 gezeigten Ausführungsform bestehen die Verbindungselemente aus Glaskeramik-Werkstoff, beispielsweise Zerodur oder Ceran. Alternativ lassen sich auch Metallegierungen, wie Invar, einsetzen.

Die Antastformelemente 2 können aus Stahl oder Keramik oder Glaskeramik-Werkstoff ausgebildet sein.

Durch bloße Verwendung von Glaskeramik-Werkstoff für die Verbindungselemente und dem herkömmlichem Werkstoff für die Antastformelemente zeigt der erfindungsgemäße Prüfkörper bezüglich seiner Stabilität bei Standardmeßbedingungen bereits eine merkliche Verbesserung gegenüber den bekannten Prüfkörpern, deren Verbindungselemente aus Kohlenstoffaser-Verbundwerkstoff bestehen.

Bei Verwendung von Antastformelementen aus Glaskeramik-Werkstoff kann dieser Effekt noch gesteigert werden.

In Fig. 2 ist eine zusätzliche Fixiereinrichtung 5 für die Verbindungselemente dargestellt. Diese zusätzliche Fixiereinrichtung 5, die insbesondere im Zusammenhang mit einer lösbaren Verbindung vorteilhaft ist, umfaßt drei Verbindungseinheiten 6 und 6', mit denen jeweils ein Verbindungselement 3 festgelegt werden kann. Hierdurch wird zum einen eine einfache Montage des Prüfkörpers ermöglicht. Zum anderen wird durch die Fixiereinrichtung 5 die Stabilität des Prüfkörpers erhöht. Diese Fixiereinrichtung läßt sich insbesondere auch anstelle der magnetischen Verbindung einsetzen.

Darüber hinaus kann die Fixiereinrichtung eine Justiereinrichtung umfassen (nicht gezeigt), mittels der der Prüfkörper justierbar ist.

Ein erfindungsgemäßer Prüfkörper, dessen Verbindungselemente aus Glaskeramik-Werkstoff und dessen Antastformelelmente aus Keramik bestehen, zeigt bei einer Tetraederkantenlänge von einem Meter eine Längenausdehnung von weniger als 0.01 µm/°C. Ein bekannter Prüfkörper, dessen Verbindungselemente aus Kohlenstoffaser-Verbundwerkstoff und dessen Antastformelemente aus Keramik bestehen, zeigt hingegen eine Längenausdehnung von ungefähr -0.12 µm/°C.

Neben der oben beschriebenen Ausführungsform sind eine Vielzahl weiterer Ausführungsformen möglich, die von der erfindungsgemäßen Lehre Gebrauch machen.

Gemäß einer weiteren, nicht dargestellten Ausführungsform können die Antastformelemente aus einem Material mit einem positiven Längenausdehnungskoeffizienten bei Standardmeßbedingungen bestehen und die Verbindungselemente ein Material mit einem negativen Längenausdehnungskoeffizienten bei Standardmeßbedinungen aufweisen. In dieser Ausführungsform sind die Bemessung der Antastformelemente und die Bemessung der Verbindungselemente derart aufeinander abgestimmt, daß sich der positive Längenausdehnungskoeffizient der Antastformelemente und der negative Längenausdehnungskoeffizient der Verbindungselemente so kompensieren, daß der gesamte Längenausdehnungskoeffizient im wesentlichen zu Null wird.

Beispielsweise lassen sich in diesem Ausführungsbeispiel die Antastformelemente aus Stahl oder Keramik ausbilden, und das Material der Verbindungselemente kann Kohlenstoffaser-Verbundwerkstoff umfassen.

Gemäß einer Abwandlung dieser Ausführungsform können auch die Antastformelemente aus einem Material mit einem positiven Längenausdehnungskoeffizienten bei Standardmeßbedingungen und die Verbindungselemente aus einem Material mit einem negativen Längenausdehnungskoeffizienten bei Standardmeßbedingungen hergestellt werden. Demnach können die Verbindungselemente Stahl oder Keramik umfassen, während die Antastformelemente aus Kohlenstoffaser-Verbundwerkstoff bestehen.

Gemäß einer weiteren, nicht dargestellten Ausführungsform der vorliegenden Erfindung können Verbindungselemente ein erstes Material mit einem positiven Längenausdehnungskoeffizienten und ein zweites Material mit einem negativen Längenausdehnungskoeffizienten bei Standardmeßbedingungen aufweisen. In dieser Ausführungsform sind die Verteilung des ersten und zweiten Materials in den Verbindungselementen derart aufeinander abgestimmt, daß sich der positive Längenausdehnungskoeffizient des ersten Materials und der negative Längenausdehnungskoeffizient des zweiten Materials so kompensieren, daß der Gesamtlängenausdehnungskoeffizient bei Standardmeßbedingungen im wesentlichen zu Null wird. Da die Verbindungselemente den größten Einfluß auf den Abstand zwischen zwei Abtastpunkten auf verschiedenen Abtastformelementen ausüben, kann bereits durch eine derartige Ausbildung der Verbindungselemente eine gegenüber dem Stand der Technik verbesserte Formstabilität des Prüfkörpers erzielt werden.

Gemäß einer vorteilhaften Weiterbildung dieser Ausführungsform kann zusätzlich ein Restausdehnungskoeffizient des Verbindungselements durch geeignete Wahl des Materials und der Bemessung der Antastformelemente kompensiert werden. Hierdurch ist eine weitere Verbesserung des erfindungsgemäßen Prüfkörpers gegenüber dem Stand der Technik möglich.

Falls die Verbindungselemente keine Restausdehnungskoeffiziente zeigen, werden gemäß einer weiteren Ausführungsform Antastformelemente mit einem verschwindenden Längenausdehnungskoeffizienten, beispielsweise Glaskeramik, wie Zerodur oder Ceran, oder Metallegierungen, wie Invar, eingesetzt.

In den bisher beschriebenen Ausführungsformen weisen die Antastformelemente zwar eine Kugelform auf, diese Form ist jedoch lediglich beispielhaft. Vielmehr lassen sich auch weitere Formen, beispielsweise Würfel oder Quader, Tetraeder und dergleichen einsetzen.

Selbes gilt auch für die stabförmigen Verbindungselemente. Auch diese Elemente könen von der Stabform abweichende Formen aufweisen.

## Patentansprüche

1. Prüfkörper (1) mit
vier Antastformelementen (2), und
sechs Verbindungselementen (3),
wobei die Antastformelemente (2, 2') durch die Verbindungselemente (3) derart verbunden sind, daß jedes Antastformelement (2) genau drei Verbindungselemente (3, 3', 3") an deren Endflächen berührt und durch die Antastformelemente (2) und die Verbindungselemente (3) insgesamt ein Tetraeder gebildet wird, an dessen Ecken die Antastformelemente (2) angeordnet sind,
**dadurch gekennzeichnet, daß**
das Material und/oder die Bemessung der Antastformelemente und das Material und/oder die Bemessung der Verbindungselemente derart aufeinander abgestimmt sind, daß der Gesamtlängenausdehnungskoeffizient bei Standardmeßbedingungen von Antastpunkt (P) zu Antastpunkt (P') auf verschiedenen Antastformelementen (2, 2') im wesentlichen gleich Null ist.

2. Prüfkörper nach Anspruch 1, in welchem
die Antastformelemente ein Material mit positivem oder negativen Längenausdehnungskoeffizienten bei Standardmeßbedingungen aufweisen,
die Verbindungselemente ein Material mit negativem bzw. positivem Längenausdehnungskoeffizienten bei Standardmeßbedingungen aufweisen,
die Bemessung der Antastformelemente und die Bemessung der Verbindungselemente derart aufeinander abgestimmt sind, daß der Gesamtlängenausdehnungskoeffizient bei Standardmeßbedingungen von Antastpunkt (P) zu Antastpunkt (P') auf verschiedenen Antastformelementen (2, 2') im wesentlichen gleich Null ist.

3. Prüfkörper nach Anspruch 2, in welchem das Material der Antastformelemente Stahl oder Keramik umfaßt, und das Material der Verbindungselemente Kohlenstoffaser-Verbundwerkstoff umfaßt.

4. Prüfkörper nach Anspruch 1, in welchem
das Material der Verbindungselemente Glaskeramik-Werkstoff umfaßt, und
das Material der Antastformelemente Stahl oder Keramik oder Glaskeramik-Werkstoff umfaßt,
wodurch das Material der Verbindungselemente und das Material der Antastformelemente so aufeinander abgestimmt sind, daß der Gesamtlängenausdehnungskoeffizient bei Standardmeßbedingungen von Antastpunkt (P) zu Antastpunkt (P') auf verschiedenen Antastformelementen (2, 2') im wesentlichen gleich Null ist.

5. Prüfkörper nach Anspruch 4, in welchem der Glaskeramik-Werkstoff Zerodur oder Ceran umfaßt.

6. Prüfkörper nach Anspruch 1, in welchem
die Verbindungselemente ein erstes Material mit einem positiven Längenausdehnungskoeffizienten bei Standardmeßbedingungen und ein zweites Material mit einem negativen Längenausdehnungskoeffizienten bei Standardmeßbedingungen aufweisen, und
das Material der Antastformelemente Stahl oder Keramik oder Glaskeramik-Werkstoff umfaßt,
wobei die Verteilung des ersten und zweiten Materials im Verbindungselement und das Material der Antastformelemente derart aufeinander abgestimmt sind, daß der Gesamtlängenausdehnungskoeffizient bei Standardmeßbedingungen von Antastpunkt (P) zu Antastpunkt (P') auf verschiedenen Antastformelementen (2, 2') im wesentlichen gleich Null ist.

7. Prüfkörper nach Anspruch 6, in welchem das erste Material des Verbindungselements Stahl umfaßt, und das zweite Material des Verbindungselements Kohlenstoffaser-Verbundwerkstoff umfaßt.

8. Prüfkörper nach einem der vorangegangenen Ansprüche, in welchem die Antastformelemente (2) kugelförmig ausgebildet sind.

9. Prüfkörper nach einem der vorangegangenen Ansprüche, in welchem die Verbindungselemente (3) stabförmig ausgebildet sind.

10. Prüfkörper nach Anspruch 8 in Verbindung mit Anspruch 9, in welchem die Kugelmittelpunkte der Antastformelemente auf den Verlängerungen der Achsen der stabförmigen Verbindungselemente liegen.

11. Prüfkörper nach einem der vorangegangenen Ansprüche, in welchem die Endflächen der Verbindungselemente kegelförmig ausgebildet sind.

12. Prüfkörper nach einem der vorangegangenen Ansprüche, in welchem die Antastformelemente (2) und die Verbindungselemente (3) lösbar miteinander verbunden sind.

13. Prüfkörper nach Anspruch 12, in welchem die lösbare Verbindung durch Magnetkräfte realisiert ist.

14. Prüfkörper nach Anspruch 13, in welchem zur Ausbildung der magnetischen Verbindung Magnete mit den Enden der Verbindungselemente elastisch verklebt sind.

15. Großprüfkörper mit einer gitterförmigen Struktur, die aus wenigstens zwei Prüfkörpern gemäß einem der vorangegangenen Ansprüche aufgebaut ist, wobei jeweils einander benachbarte Antastformelemente durch ein Antastformelement ersetzt sind, und jeweils parallele benachbarte Verbindungselemente durch ein Verbindungselement ersetzt sind.

## Claims

1. Test body (1) with
four shaped sensing elements (2) and
six connecting elements (3),
the shaped sensing elements (2, 2') being connected by the connecting elements (3) in such a way that each shaped sensing element (2) touches precisely three connecting elements (3, 3', 3'') at the end faces of the latter and the shaped sensing elements (2) and the connecting elements (3) altogether form a tetrahedron, at the corners of which the shaped sensing elements (2) are arranged,
**characterized in that**
the material and/or the dimensioning of the shaped sensing elements and the material and/or the dimensioning of the connecting elements are made to match one another in such a way that the overall coefficient of linear expansion under standard measuring conditions from sensing point (P) to sensing point (P') on different shaped sensing elements (2, 2') is substantially equal to zero.

2. Test body according to Claim 1, in which
the shaped sensing elements have a material with a positive or negative coefficient of linear expansion under standard measuring conditions,
the connecting elements have a material with a negative or positive coefficient of linear expansion under standard measuring conditions,
the dimensioning of the shaped sensing elements and the dimensioning of the connecting elements are made to match one another in such a way that the overall coefficient of linear expansion under standard measuring conditions from sensing point (P) to sensing point (P') on different shaped sensing elements (2, 2') is substantially equal to zero.

3. Test body according to Claim 2, in which the material of the shaped sensing elements comprises steel or ceramic, and the material of the connecting elements comprises carbon fibre composite material.

4. Test body according to Claim 1, in which
the material of the connecting elements comprises glass ceramic material, and
the material of the shaped sensing elements comprises steel or ceramic or glass ceramic material,
whereby the material of the connecting elements and the material of the shaped sensing elements are made to match one another in such a way that the overall coefficient of linear expansion under standard measuring conditions from sensing point (P) to sensing point (P') on different shaped sensing elements (2, 2') is substantially equal to zero.

5. Test body according to Claim 4, in which the glass ceramic material comprises Zerodur or Ceran.

6. Test body according to Claim 1, in which
the connecting elements have a first material with a positive coefficient of linear expansion under standard measuring conditions and a second material with a negative coefficient of linear expansion under standard measuring conditions, and
the material of the shaped sensing elements comprises steel or ceramic or glass ceramic material,
the distribution of the first material and second material in the connecting element and the material of the shaped sensing elements are made to match one another in such a way that the overall coefficient of linear expansion under standard measuring conditions from sensing point (P) to sensing point (P') on different shaped sensing elements (2, 2') is substantially equal to zero.

7. Test body according to Claim 6, in which the first material of the connecting element comprises steel, and the second material of the connecting element comprises carbon fibre composite material.

8. Test body according to one of the preceding claims, in which the shaped sensing elements (2) are formed as spheres.

9. Test body according to one of the preceding claims, in which the connecting elements (3) are formed as rods.

10. Test body according to Claim 8 in conjunction with Claim 9, in which the centre points of the spheres of the shaped sensing elements lie on the extensions of the axes of the connecting elements in rod form.

11. Test body according to one of the preceding claims, in which the end faces of the connecting elements are formed as cones.

12. Test body according to one of the preceding claims, in which the shaped sensing elements (2) and the connecting elements (3) are releasably connected to one another.

13. Test body according to Claim 12, in which the releasable connection is realized by magnetic forces.

14. Test body according to Claim 13, in which magnets are adhesively bonded elastically to the ends of the connecting elements in order to form the magnetic connection.

15. Large test body with a structure in grid form, which is constructed from at least two test bodies according to one of the preceding claims, shaped sensing elements that are respectively adjacent to one another being replaced by one shaped sensing element, and connecting elements that are respectively parallel and adjacent being replaced by one connecting element.

## Revendications

1. Spécimen d'essai (1) avec
quatre éléments de forme de contact (2), et
six éléments de liaison (3),
les éléments de forme de contact (2, 2') étant reliés par les éléments de liaison (3) de sorte que chaque élément de forme de contact (2) touche exactement trois éléments de liaison (3, 3', 3") à leurs surfaces d'extrémité et que les éléments de forme de contact (2) et les éléments de liaison (3) forment ensemble un tétraèdre aux angles duquel les éléments de forme de contact sont placés,
**caractérisé en ce que**
le matériau et/ou le dimensionnement des éléments de forme de contact et le matériau et/ou le dimensionnement des éléments de liaison sont adaptés les uns aux autres de sorte que le coefficient global de dilatation en longueur dans des conditions de mesure standards du point de contact (P) au point de contact (P') sur différents éléments de forme de contact (2, 2') soit pour l'essentiel égal à zéro.

2. Spécimen d'essai selon la revendication 1, dans lequel
les éléments de forme de contact comportent un matériau avec des coefficients de dilatation thermique en longueur négatifs ou positifs dans des conditions de mesure standards,
les éléments de liaison comportent un matériau avec des coefficients de dilatation thermique en longueur négatifs ou positifs dans des conditions de mesure standards,
le dimensionnement des éléments de forme de contact et le dimensionnement des éléments de liaison sont adaptés l'un à l'autre de sorte que le coefficient global de dilatation en longueur dans des conditions de mesure standards du point de contact (P) au point de contact (P') sur différents éléments de forme de contact (2, 2') soit pour l'essentiel égal à zéro.

3. Spécimen d'essai selon la revendication 2, dans lequel le matériau des éléments de forme de contact comprend de l'acier ou de la céramique et le matériau des éléments de liaison du matériau composite de fibre de carbone.

4. Spécimen d'essai selon la revendication 1, dans lequel
le matériau des éléments de liaison comprend du matériau en vitrocéramique et
le matériau des éléments de forme de contact comprend de l'acier, ou de la céramique ou du matériau en vitrocéramique,
le matériau des éléments de liaison et le matériau des éléments de forme de contact étant ainsi adaptés l'un à l'autre de sorte que le coefficient global de dilatation en longueur dans des conditions de mesure standards du point de contact (P) au point de contact (P') sur différents éléments de forme de contact (2, 2') soit pour l'essentiel égal à zéro.

5. Spécimen d'essai selon la revendication 4, dans lequel le matériau en vitrocéramique comprend du Zerodur® ou du Ceran®.

6. Spécimen d'essai selon la revendication 1, dans lequel
les éléments de liaison comportent un premier matériau avec un coefficient de dilatation thermique en longueur positif dans des conditions de mesure standards et un deuxième matériau avec un coefficient de dilatation thermique en longueur négatif dans des conditions de mesure standards et
le matériau des éléments de forme de contact comprend de l'acier, ou de la céramique ou du matériau en vitrocéramique,
la répartition du premier et du deuxième matériau dans l'élément de liaison et le matériau des éléments de forme de contact étant adaptée de sorte que le coefficient global de dilatation en longueur dans des conditions de mesure standards du point de contact (P) au point de contact (P') sur différents éléments de forme de contact (2, 2') soit pour l'essentiel égal à zéro.

7. Spécimen d'essai selon la revendication 6, dans lequel le premier matériau de l'élément de liaison comprend de l'acier et le deuxième matériau de l'élément de liaison comprend du matériau composite de fibre de carbone.

8. Spécimen d'essai selon une des revendications précédentes, dans lequel les éléments de forme de contact (2) ont une forme sphérique.

9. Spécimen d'essai selon une des revendications précédentes, dans lequel les éléments de liaison (3) ont la forme de barres.

10. Spécimen d'essai selon la revendication 8 associée à la revendication 9, dans lequel les points centraux des sphères des éléments de forme de contact sont situés sur les prolongements des axes des éléments de liaison en forme de barres.

11. Spécimen d'essai selon une des revendications précédentes, dans lequel les surfaces d'extrémité des éléments de liaisons ont la forme de cônes.

12. Spécimen d'essai selon une des revendications précédentes, dans lequel les éléments de forme de contact (2) et les éléments de liaison (3) sont reliés les uns aux autres de manière amovible.

13. Spécimen d'essai selon la revendication 12, dans lequel la liaison amovible est réalisée par des forces magnétiques.

14. Spécimen d'essai selon la revendication 13, dans lequel des aimants sont collés de manière élastique avec les extrémités des éléments de liaison pour générer la liaison magnétique.

15. Grand spécimen d'essai avec une structure en forme de grille composé d'au moins deux spécimens d'essai selon une des revendications précédentes, des éléments de forme de contact adjacents étant respectivement remplacés par un élément de forme de contact et des éléments de liaison parallèles adjacents étant respectivement remplacés par un élément de liaison.
